# EUROPEAN PATENT APPLICATION

(11) **EP 4 567 788 A2**
(43) Date of publication of application: **11.06.2025**
(21) Application number: 24217995.0
(22) Date of filing: 06.12.2024
(51) Int. Cl.: G10K 11/178

(54) **METHOD AND APPARATUS FOR ROAD NOISE CANCELLATION**

(30) Priority: 08.12.2023 US 202363607967 P
(71) Applicant: Harman International Industries, Inc., Stamford, Connecticut 06901 (US)
(72) Inventor: KIM, Geon-Seok, Stamford, CT 06901 (US); FENG, Tao, Stamford, CT 06901 (US); HINZ, Michael, Stamford, CT 06901 (US)
(74) Representative: Westphal, Mussgnug & Partner, Patentanwälte mbB

(57) **Abstract**

Described herein are methods and systems for a vehicle system which provide inbuilt road noise cancellation in the vehicle. In one or more embodiments, a method for road noise cancellation comprises using a head-tracking device to monitor an occupant ear position, capturing airborne noise using a feedforward microphone and a headrest microphone of a zone in which the occupant ear is positioned, updating acoustic path information according to the occupant ear position(s) and speaker position(s) within the zone, generating a noise cancellation signal using sampling rate greater than 2kHz, and outputting the noise cancellation signal via a headrest speaker located near the zone in which the occupant ear is positioned to at least partially reduce a road noise sound level in the zone.

## Description

### CROSS-REFERENCE TO RELATED APPLICATIONS

The present application claims priority to U.S. Provisional Application No. 63/607,967, entitled "METHOD AND APPARATUS FOR ROAD NOISE CANCELLATION", filed on December 8, 2023. The entire contents of the above-listed application is hereby incorporated by reference for all purposes.

### FIELD

The disclosure relates to methods and apparatuses for an audio environment of a vehicle.

### BACKGROUND

An active road noise cancellation (RNC) system is a noise, vibration, and harshness (NVH) mitigating system that effectively reduces persistent vehicle rumble and booming noise in a cabin of a vehicle. Conventional RNC systems cancel low frequency, structure-born noise, which is typically below 400Hz. Conventional RNC systems and other NVM mitigation systems may experience challenges when attempting to reduce high frequency noises (e.g., at or above 400 Hz). These challenges may be due to lack of airborne noise source detection, long latency, and a small quiet zone. Although these systems may provide appreciable noise attenuation, it remains desirable to mitigate remaining high frequency noise contents for a quiet and comfortable cabin experience. Automotive grade digital signal processing (DSP) and digital sensors may be implemented in a RNC system to assist in NVM mitigation for frequencies at and above 400 Hz.

### SUMMARY

Described herein are methods and systems for a vehicle system which provide inbuilt road noise cancellation in the vehicle. In one or more embodiments, a method for road noise cancellation comprises using a head-tracking system to monitor an occupant ear position, capturing airborne noise using a feedforward microphone and a headrest microphone of a zone in which the occupant ear is positioned, updating acoustic path information according to the occupant ear position and speaker position(s) within the zone, achieving fast system latency using a sampling rate of at least 2kHz and low latency anti-aliasing (AA)-filters, and outputting sound via a headrest speaker located near the zone in which the occupant ear is positioned to at least partially reduce a road noise sound level in the zone. The method may be implemented by a high frequency road noise cancellation (HF-RNC) system, comprising a feedforward sensor, including an accelerometer and a microphone, a vehicle speaker system, including a headrest speaker, a door speaker, a center speaker, and a subwoofer, a cabin microphone, including a headrest microphone and a headliner microphone, a head-tracking system configured to detect an occupant ear position and seat location, an embedded system including a digital signal processing system, a low latency signal processing system, low latency filters, a power management integrated circuit, and a controller with computer-readable instructions stored on non-volatile memory that, when executed, causes the controller to execute the above described method.

It should be understood that the summary above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

### BRIEF DESCRIPTION OF THE DRAWINGS

The disclosure may be better understood from reading the following description of non-limiting embodiments, with reference to the attached drawings, wherein below:
FIG. 1 shows a block diagram of an in-vehicle computing system and one or more external devices;
FIG. 2 shows a block diagram of a high frequency road noise cancellation (HF-RNC) system;
FIG. 3 shows a graph illustrating coherence between a headrest microphone and feedforward accelerometer signals;
FIG. 4 shows a graph comparing impulse responses from a door speaker compared to from a headrest speaker;
FIG. 5 shows a graph which compares a frequency response of the headrest speaker with that of a door speaker;
FIG. 6 shows an example of a headrest of the HF-RNC system;
FIG. 7 shows a graph that compares noise directly measured at the occupant ear and estimated noise at the occupant ear by virtual sensing techniques;
FIG. 8 shows an illustration of an interior of a vehicle configured with the HF-RNC system, and a pathway of the AI-based head-tracking system;
FIG. 9 shows a block diagram of an algorithm of the HF-RNC system;
FIG. 10 shows a graph illustrating driver seat noise cancellation performance of the HF-RNC system; and
FIG. 11 shows a flow chart illustrating a method for active road noise cancellation, as implemented by the HF-RNC system.

### DETAILED DESCRIPTION

The following description relates to systems and methods for inbuilt road noise cancellation in a vehicle system. In one or more examples, a method for road noise cancellation comprises monitoring an occupant ear position using a head-tracking device; capturing an airborne noise source using a feedforward microphone and a headrest microphone of a zone of the occupant ear position; updating acoustic path information according to the occupant ear position and speaker position within the zone; generating a noise cancellation signal using a sampling rate greater than 2kHz; and outputting the noise cancellation signal via a headrest speaker located near the zone of the occupant ear position to at least partially reduce a road noise sound level in the zone.

The vehicle HF-RNC system described herein extends a noise cancellation frequency range to and beyond 1kHz. The vehicle HF-RNC system comprises multiple enablers, including feedforward microphones, headrest microphones, headrest speakers, low latency signal processing, a head tracking system, and an extended multi-input/multi-output system. An airborne noise source is captured using the feedforward microphone. Low system latency is achieved through a fast-sampling rate and low latency anti-aliasing filters. Along with vehicle door speakers and subwoofers, headrest speakers are used to reduce audio latency in the acoustic domain. Cabin microphones may be mounted in the same housing as the headrest speaker, and may be positioned in the headrest and/or seat shoulder. Occupant ear position movement is monitored using a head-tracking system. The head-tracking system further uses a face recognition artificial intelligence (AI) algorithm to detect the position of occupant ears and headrest speakers, and works with a stereo camera to identify three-dimensional locations thereof.

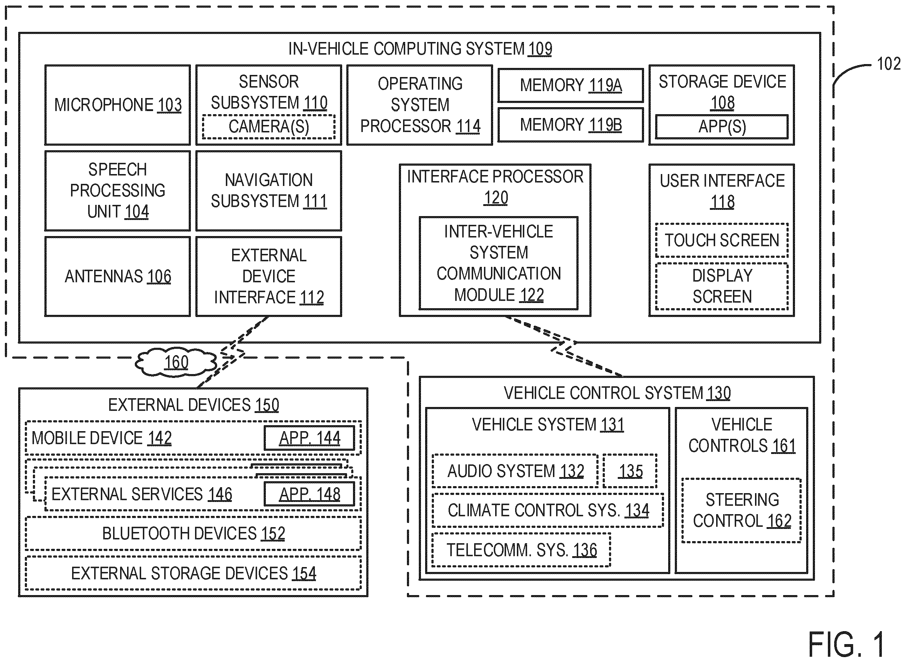

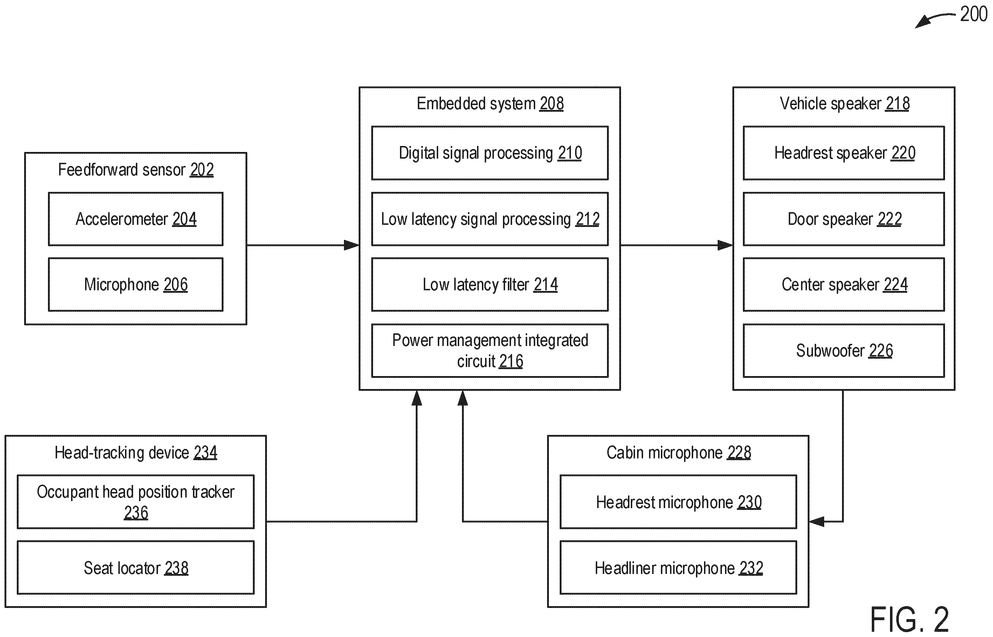

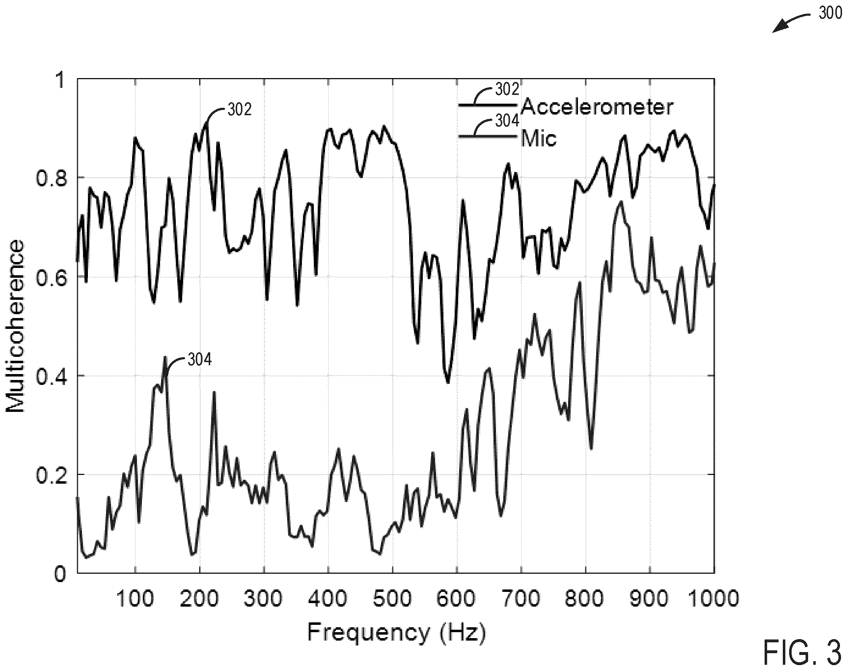

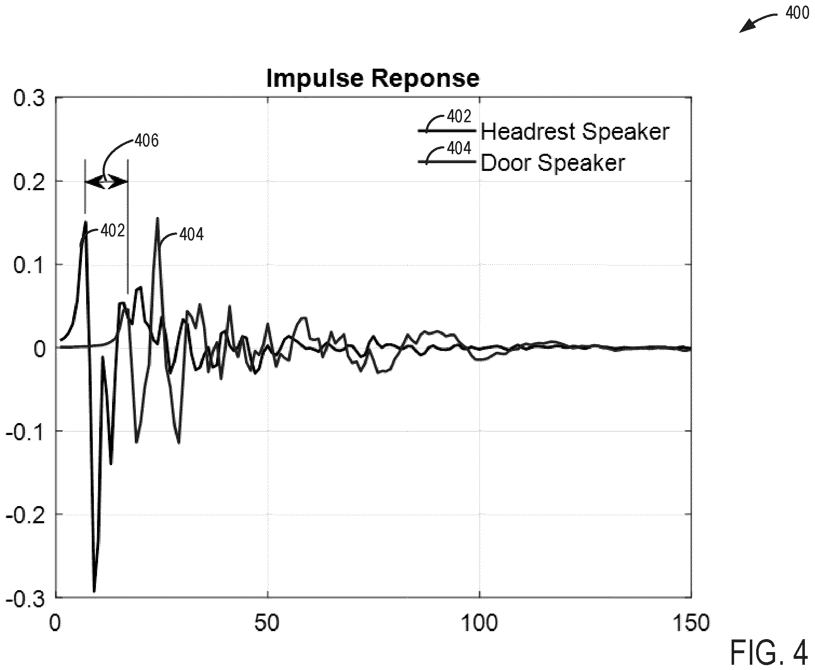

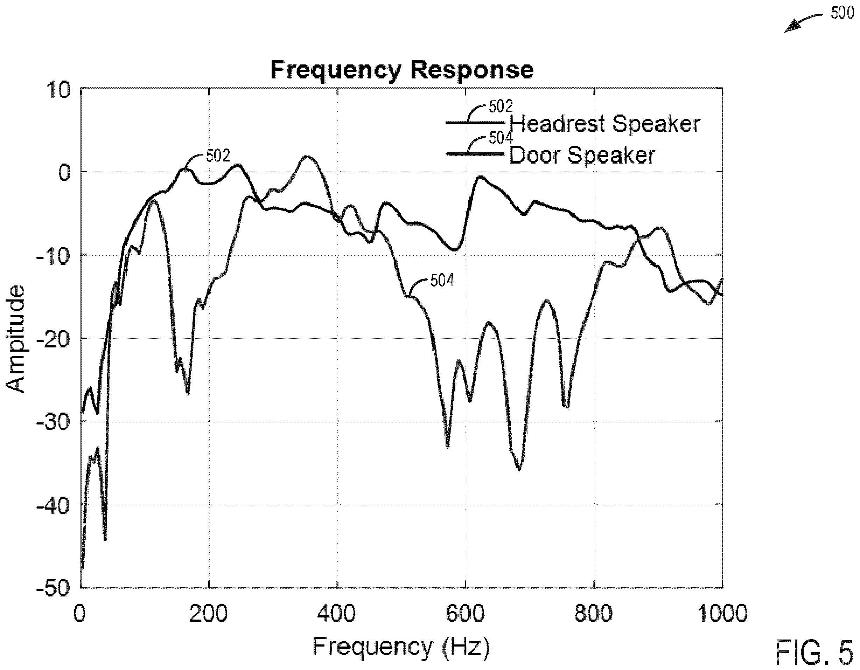

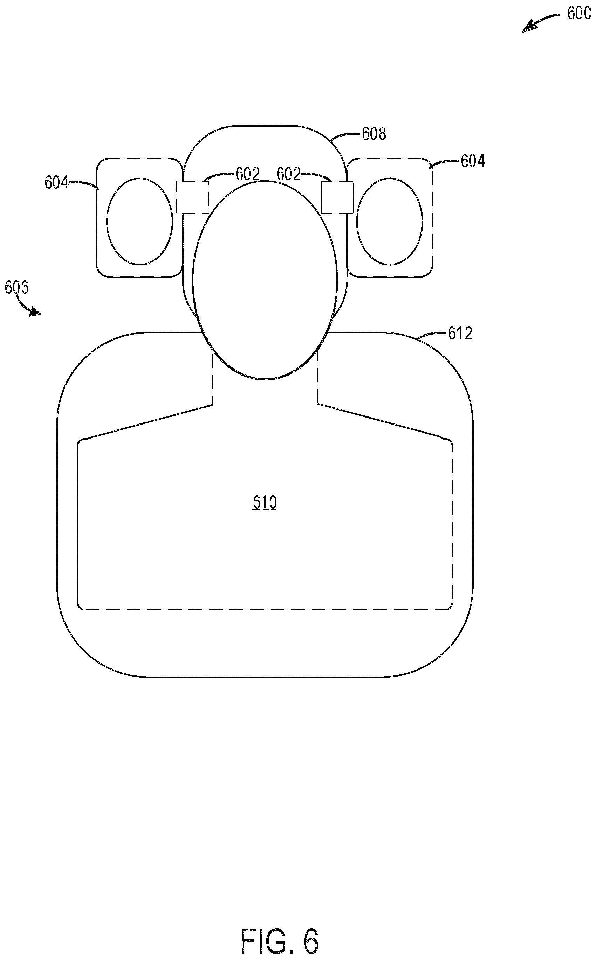

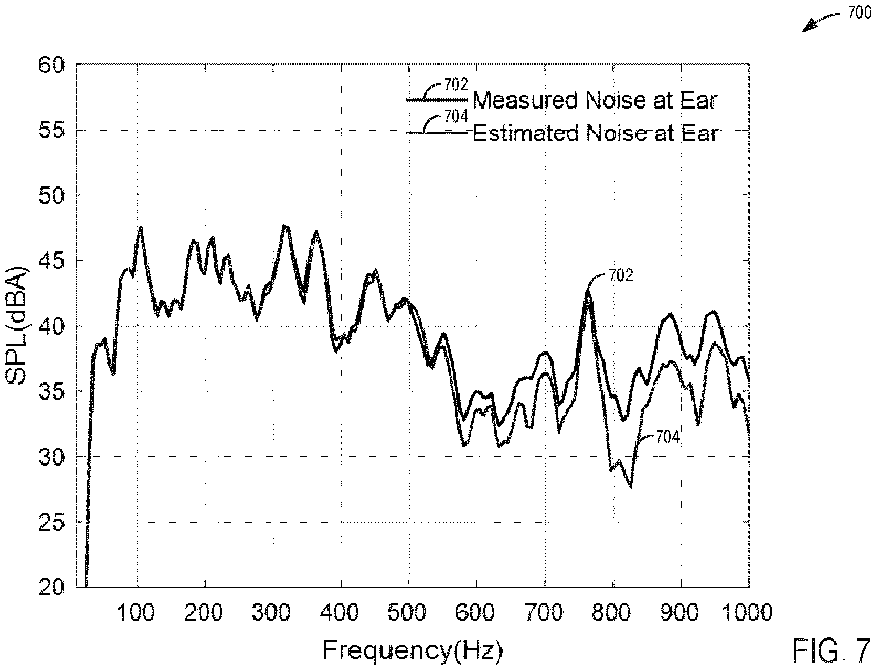

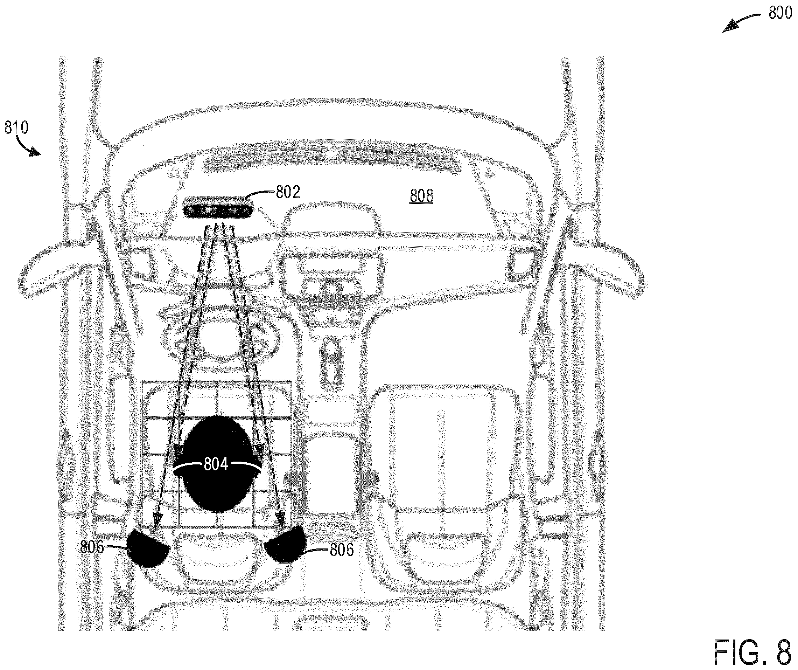

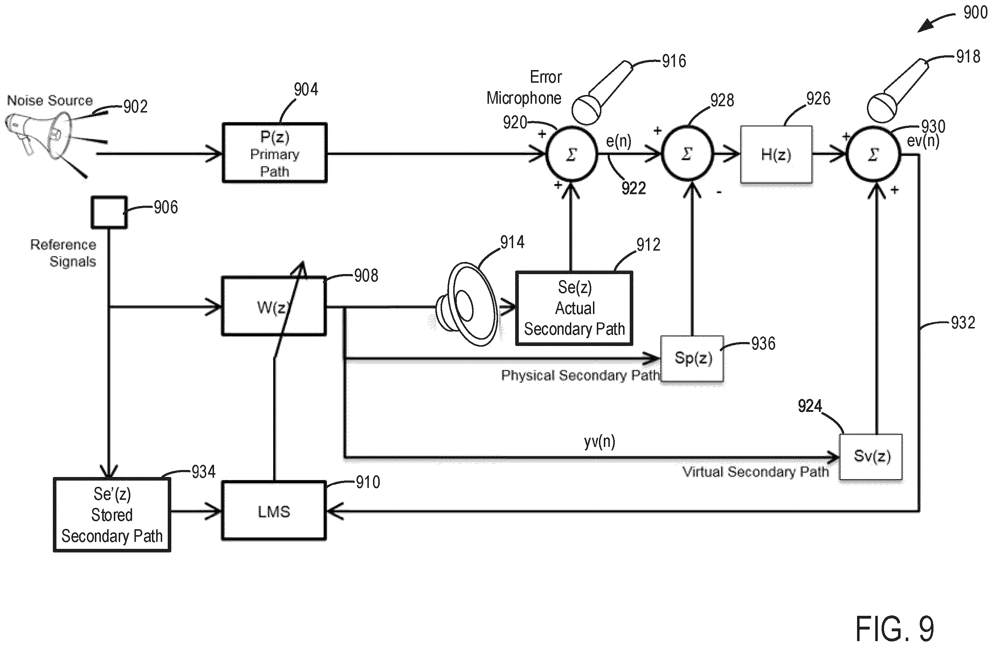

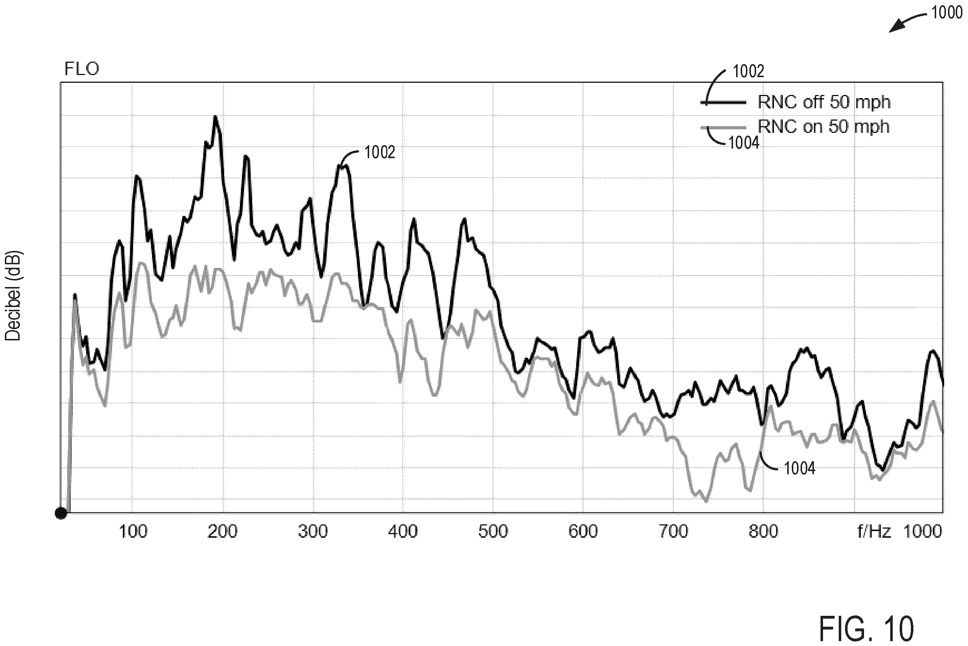

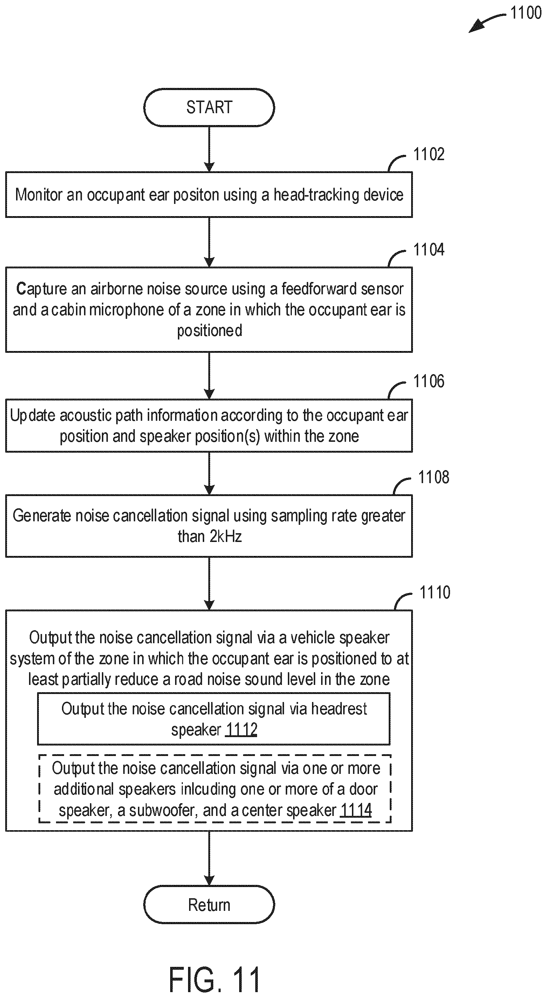

FIG. 1 illustrates an example of an in-vehicle computing system of a vehicle, where the in-vehicle computing system may include and/or be communicably coupled to elements of a road noise cancellation (RNC) system. The RNC system may be a high frequency RNC (HF-RNC) system. A block diagram of the HF-RNC system is shown in FIG. 2. FIG. 3 shows a graph illustrating coherence between a headrest microphone and feedforward accelerometer signals of the HF-RNC system. FIG. 4 shows a graph comparing impulse responses from a door speaker compared to from a headrest speaker. FIG. 5 shows a graph which compares a frequency response of a headrest speaker with that of a door speaker. FIG. 6 shows an embodiment of a headrest noise cancellation system, which may be included in the HF-RNC system. FIG. 7 shows a graph that compares noise directly measured at the occupant (e.g., user) ear and estimated noise at the occupant ear by virtual microphone techniques. FIG. 8 shows an illustration of an interior of a vehicle configured with the HF-RNC system, and a pathway of the AI-based head-tracking system. FIG. 9 shows a block diagram of an algorithm of the HF-RNC system. FIG. 10 shows a graph illustrating driver seat noise cancellation performance of the HF-RNC system. FIG. 11 shows a flow chart illustrating a method for active road noise cancellation, as implemented by the HF-RNC system.

FIG. 1 shows a block diagram of an in-vehicle computing system 109 of a vehicle 102. In-vehicle computing system 109 may perform one or more of the methods described herein in some embodiments. In some examples, the in-vehicle computing system 109 may be a vehicle infotainment system configured to provide information-based media content (audio and/or visual media content, including entertainment content, navigational services, and so on) to a vehicle user to enhance the operator's in-vehicle experience. In-vehicle computing system 109 may include, or be coupled to, various vehicle systems, sub-systems, hardware components, as well as software applications and systems that are or may be integrated in vehicle 102 in order to enhance an in-vehicle experience for a driver and/or a passenger. In-vehicle computing system 109 may further be coupled to elements of a RNC system, such as the HF-RNC system further described with respect to FIG. 2.

In-vehicle computing system 109 may include one or more processors including an operating system processor 114 and an interface processor 120. Operating system processor 114 may execute an operating system on in-vehicle computing system 109, and control input/output, display, playback, and other operations of in-vehicle computing system 109. Interface processor 120 may interface with a vehicle control system 130 via an inter-vehicle system communication module 122.

Inter-vehicle system communication module 122 may output data to one or more other vehicle systems 131 and/or one or more other vehicle control elements 161, while also receiving data input from other vehicle systems 131 and other vehicle control elements 161, e.g., by way of vehicle control system 130. When outputting data, inter-vehicle system communication module 122 may provide a signal via a bus corresponding to any status of the vehicle, the vehicle surroundings, or the output of any other information source connected to the vehicle. Vehicle data outputs may include, for example, analog signals (such as current velocity), digital signals provided by individual information sources (such as clocks, thermometers, location sensors such as Global Positioning System (GPS) sensors, and so on), and/or digital signals propagated through vehicle data networks (such as an engine controller area network (CAN) bus through which engine related information may be communicated). For example, in-vehicle computing system 109 may retrieve from the engine CAN bus the current speed of the vehicle estimated by the wheel sensors, a power state of the vehicle via a battery and/or power distribution system of the vehicle, an ignition state of the vehicle, and so on. In addition, other interfacing means such as Ethernet may be used as well without departing from the scope of this disclosure.

A storage device 108 may be included in in-vehicle computing system 109 to store data such as instructions executable by operating system processor 114 and/or interface processor 120 in non-volatile form. Storage device 108 may store application data, including prerecorded sounds, to enable in-vehicle computing system 109 to run an application for connecting to a cloud-based server and/or collecting information for transmission to the cloud-based server. The application may retrieve information gathered by vehicle systems/sensors, input devices (e.g., a user interface 118), data stored in one or more storage devices, such as a volatile memory 119A or a non-volatile memory 119B, devices in communication with the in-vehicle computing system (e.g., a mobile device connected via a Bluetooth^{®} link), and so on. (Bluetooth^{®} is a registered trademark of Bluetooth SIG, Inc., Kirkland, WA.) In-vehicle computing system 109 may further include a volatile memory 119A. Volatile memory 119A may be random access memory (RAM). Non-transitory storage devices, such as non-volatile storage device 108 and/or non-volatile memory 119B, may store instructions and/or code that, when executed by a processor (e.g., operating system processor 114 and/or interface processor 120), controls in-vehicle computing system 109 to perform one or more of the actions described in the disclosure.

A microphone 103 may be included in in-vehicle computing system 109 to receive voice commands from a user, to measure ambient noise in the vehicle, to determine whether audio from speakers of the vehicle is tuned in accordance with an acoustic environment of the vehicle, and so on. A cabin of the vehicle may include more than one microphone 103. Briefly, the cabin may be divided into multiple zones, and each zone of the multiple zones may have a microphone positioned therein to measure ambient noise within the respective zone. A speech processing unit 104 may process voice commands, such as the voice commands received from microphone 103. In some embodiments, in-vehicle computing system 109 may also be able to receive voice commands and sample ambient vehicle noise using a microphone included in an audio system 132 of the vehicle.

One or more additional sensors may be included in a sensor subsystem 110 of in-vehicle computing system 109. For example, sensor subsystem 110 may include a camera, such as a rear view camera for assisting a user in parking the vehicle and/or a cabin camera for identifying a user (e.g., using facial recognition and/or user gestures). As further described herein, the cabin camera may be used to detect a position of a head of the user. Sensor subsystem 110 may further include one or more pressure sensors and/or attachment sensors, for example, in one or more zones of the cabin to detect a presence of a user within the respective zone. Sensor subsystem 110 of in-vehicle computing system 109 may communicate with and receive inputs from various vehicle sensors and may further receive user inputs. For example, the inputs received by sensor subsystem 110 may include transmission gear position, transmission clutch position, gas pedal input, brake input, transmission selector position, vehicle speed, engine speed, mass airflow through the engine, ambient temperature, intake air temperature, and so on, as well as inputs from climate control system sensors, an audio sensor detecting voice commands issued by a user, a fob sensor receiving commands from and optionally tracking the geographic location/proximity of a fob of the vehicle, and so on.

While certain vehicle system sensors may communicate with sensor subsystem 110 alone, other sensors may communicate with both sensor subsystem 110 and vehicle control system 130, or may communicate with sensor subsystem 110 indirectly via vehicle control system 130. A navigation subsystem 111 of in-vehicle computing system 109 may generate and/or receive navigation information such as location information (e.g., via a GPS sensor and/or other sensors from sensor subsystem 110), route guidance, traffic information, point-of-interest (POI) identification, and/or provide other navigational services for the driver.

An external device interface 112 of in-vehicle computing system 109 may be couplable to and/or communicate with one or more external devices 150 located external to vehicle 102. While the external devices are illustrated as being located external to vehicle 102, it is to be understood that they may be temporarily housed in vehicle 102, such as when the user is operating the external devices while operating vehicle 102. In other words, external devices 150 are not integral to vehicle 102. External devices 150 may include a mobile device 142 (e.g., connected via a Bluetooth^{®}, NFC, WI-FI Direct^{®}, or other wireless connection) or an alternate Bluetooth^{®}-enabled device 152. (Wi-Fi Direct^{®} is a registered trademark of Wi-Fi Alliance, Austin, Texas.)

Mobile device 142 may be a mobile phone, smart phone, wearable devices/sensors that may communicate with the in-vehicle computing system via wired and/or wireless communication, or other portable electronic device(s). Other external devices include one or more external services 146. For example, the external devices may include extra-vehicular devices that are separate from and located externally to the vehicle. Still other external devices include one or more external storage devices 154, such as solid-state drives, pen drives, Universal Serial Bus (USB) drives, and so on. External devices 150 may communicate with in-vehicle computing system 109 either wirelessly or via connectors without departing from the scope of this disclosure. For example, external devices 150 may communicate with in-vehicle computing system 109 through external device interface 112 over a network 160, a USB connection, a direct wired connection, a direct wireless connection, and/or other communication link.

External device interface 112 may provide a communication interface to enable the in-vehicle computing system to communicate with mobile devices associated with contacts of the driver. For example, external device interface 112 may enable phone calls to be established and/or text messages (e.g., Short Message Service (SMS), Multimedia Message Service (MMS), and so on) to be sent (e.g., via a cellular communications network) to a mobile device associated with a contact of the driver. External device interface 112 may additionally or alternatively provide a wireless communication interface to enable the in-vehicle computing system to synchronize data with one or more devices in the vehicle (e.g., the driver's mobile device) via Wi-Fi Direct^{®}, as described in more detail below.

One or more applications 144 may be operable on mobile device 142. As an example, a mobile device application 144 may be operated to aggregate user data regarding interactions of the user with the mobile device. For example, mobile device application 144 may aggregate data regarding music playlists listened to by the user on the mobile device, telephone call logs (including a frequency and duration of telephone calls accepted by the user), positional information including locations frequented by the user and an amount of time spent at each location, and so on. The collected data may be transferred by application 144 to external device interface 112 over network 160. In addition, specific user data requests may be received at mobile device 142 from in-vehicle computing system 109 via external device interface 112. The specific data requests may include requests for determining where the user is geographically located, an ambient noise level and/or music genre at the user's location, an ambient weather condition (temperature, humidity, and so on) at the user's location, and so on. Mobile device application 144 may send control instructions to components (e.g., microphone, amplifier, and so on) or other applications (e.g., navigational applications) of mobile device 142 to enable the requested data to be collected on the mobile device or requested adjustment made to the components. Mobile device application 144 may then relay the collected information back to in-vehicle computing system 109.

Likewise, one or more applications 148 may be operable on external services 146. As an example, external services applications 148 may be operated to aggregate and/or analyze data from multiple data sources. For example, external services applications 148 may aggregate data from one or more social media accounts of the user, data from the in-vehicle computing system (e.g., sensor data, log files, user input, and so on), data from an internet query (e.g., weather data, POI data), and so on. The collected data may be transmitted to another device and/or analyzed by the application to determine a context of the driver, vehicle, and environment and perform an action based on the context (e.g., requesting/sending data to other devices).

Vehicle control system 130 may include controls for controlling aspects of various vehicle systems 131 involved in different in-vehicle functions. These may include, for example, controlling aspects of vehicle audio system 132 for reducing road noise in the cabin of the vehicle 102, aspects of a climate control system 134 for meeting the cabin cooling or heating needs of the vehicle occupants, as well as aspects of a telecommunication system 136 for enabling vehicle occupants to establish telecommunication linkage with others.

Audio system 132 may include one or more acoustic reproduction devices including electromagnetic transducers such as one or more speakers 135. Vehicle audio system 132 may be passive or active such as by including a power amplifier. In some examples, in-vehicle computing system 109 may be a sole audio source for the acoustic reproduction device or there may be other audio sources that are connected to the audio reproduction system (e.g., external devices such as a mobile phone). The connection of any such external devices to the audio reproduction device may be analog, digital, or any combination of analog and digital technologies. As further described with respect to FIG. 8, a cabin of a vehicle (e.g., the vehicle 102) may be divided into different zones. Each zone may have a dedicated set of one or more speakers 135 positioned therein which produce audio output for the respective zone. Additionally or alternatively, one or more speakers 135 of the audio system 132 may be shared by two or more zones, for example, by being placed between zones and producing an audio output for both of the zones.

Vehicle control system 130 may also include controls for adjusting the settings of various vehicle control elements 161 (or vehicle controls, or vehicle system control elements) related to the engine and/or auxiliary elements within a cabin of the vehicle, such as one or more steering wheel controls 162 (e.g., steering wheel-mounted audio system controls, cruise controls, windshield wiper controls, headlight controls, turn signal controls, and so on), instrument panel controls, microphone(s), accelerator/brake/clutch pedals, a gear shift, door/window controls positioned in a driver or passenger door, seat controls, cabin light controls, audio system controls, cabin temperature controls, and so on. Vehicle control elements 161 may also include internal engine and vehicle operation controls (e.g., engine controller module, actuators, valves, and so on) that are configured to receive instructions via the CAN bus of the vehicle to change operation of one or more of the engine, exhaust system, transmission, and/or other vehicle system. The control signals may also control audio output at one or more speakers 135 of vehicle audio system 132. For example, the control signals may adjust audio output characteristics such as volume, equalization, audio image (e.g., the configuration of the audio signals to produce audio output that appears to a user to originate from one or more defined locations), audio distribution among a plurality of speakers, and so on. For example, as further described herein with respect to FIGS. 2-10, audio output characteristics of a zone of the vehicle may be adjusted to reduce road noise in one or more zones in response to determination that a user is positioned in the zone(s) of the vehicle. Likewise, the control signals may control vents, air conditioner, and/or heater of climate control system 134. For example, the control signals may increase delivery of cooled air to a specific section of the cabin.

Control elements positioned on an outside of a vehicle (e.g., controls for a security system) may also be connected to in-vehicle computing system 109, such as via inter-vehicle system communication module 122. The control elements of vehicle control system 130 may be physically and permanently positioned on and/or in the vehicle for receiving user input. In addition to receiving control instructions from in-vehicle computing system 109, vehicle control system 130 may also receive input from one or more external devices 150 operated by the user, such as from mobile device 142. This allows aspects of vehicle systems 131 and vehicle control elements 161 to be controlled based on user input received from external devices 150.

In-vehicle computing system 109 may further include one or more antennas 106. The in-vehicle computing system may obtain broadband wireless internet access via antennas 106, and may further receive broadcast signals such as radio, television, weather, traffic, and the like. In-vehicle computing system 109 may receive positioning signals such as GPS signals via antennas 106. The in-vehicle computing system may also receive wireless commands via radio frequency (RF) such as via antennas 106 or via infrared or other means through appropriate receiving devices. In some embodiments, antenna 106 may be included as part of audio system 132 or telecommunication system 136. Additionally, antenna 106 may provide AM/FM radio signals to external devices 150 (such as to mobile device 142) via external device interface 112.

One or more elements of in-vehicle computing system 109 may be controlled by a user via user interface 118. User interface 118 may include a graphical user interface presented on a touch screen and/or display screen, and/or user-actuated buttons, switches, knobs, dials, sliders, and so on. For example, user-actuated elements may include steering wheel controls, door and/or window controls, instrument panel controls, audio system settings, climate control system settings, and the like. A user may also interact with one or more applications of in-vehicle computing system 109 and mobile device 142 via user interface 118. In addition to receiving a user's vehicle setting preferences on user interface 118, vehicle settings selected by in-vehicle control system 130 may be displayed to a user on user interface 118. Notifications and other messages (e.g., received messages), as well as navigational assistance, may be displayed to the user on a display of the user interface. User preferences/information and/or responses to presented messages may be performed via user input to the user interface.

Conventional RNC systems may use microphones and speakers (e.g., microphone 103, microphones of the audio system 132, speakers 135) to detect and reduce road noise that is present in the cabin of the vehicle. Conventional RNC systems may additionally or alternatively use accelerometers to measure the road noise-related vibration. However, conventional RNC systems experience challenges when attempting to reduce high frequency noises (e.g., at or above 400 Hz) in the cabin. A majority of road noise above 400Hz is generated by interaction of drive wheel tire tread and the road surface. Some noise is generated from radiation of tire tread and sidewall vibration (e.g., of a rim of the drive wheel), while other road noise is generated from aerodynamic interactions near the tire footprint. In contrast to a conventional RNC system, one or more microphones of the HF-RNC system may be a feedforward microphone that may be placed outside of the vehicle (e.g., on and/or near a drive wheel of the vehicle) and may be configured to detect road noise outside of the vehicle, and therefore before the road noise reaches the cabin. Similar to feedforward accelerometers, accuracy of road noise measurement may be dependent on positioning of the feedforward microphone in a position where the most airborne noise source can be captured. Feedforward microphones may also capture other aerodynamically generated noise in the vehicle underbody.

Traditional feedforward microphones may be difficult to install on an outside of a vehicle to measure vehicle outside noise due to severe environmental considerations and microphone self-noise. Additionally, the microphone may be degraded by dust and chemicals when positioned near a rotating drive wheel due to being directly exposed to high-speed airflow, wind-turbulent induced noise may contaminate microphone signals. Inclusion of a microphone windscreen may partially mitigate this issue; however, this may not be considered a long-term solution, as the windscreen itself may be degraded. The feedforward microphone sensor which is configured for the high frequency HF-RNC may meet rigorous automotive environment demands while minimizing wind noise interference. Such a microphone may be more suited for broad frequency range RNC and more specifically HF-RNC (e.g., up to, at, and greater than 400 Hz).

FIG. 2 shows an example box diagram of a high frequency road noise cancellation (HF-RNC) system 200. The HF-RNC system 200 may be implemented in different types of vehicles, such as a vehicle powered by one or more electric machines, and/or a vehicle that uses an internal combustion engine as a power source. For example, the HF-RNC system 200 may be implemented as part of the in-vehicle computing system 109 of the vehicle 102 of FIG. 1. The HF-RNC system 200 may include multiple elements that are communicably coupled. Elements may be coupled via a wired and/or a wireless connection. As shown in FIG. 2, an arrow between elements indicates information may be sent from a first element to a second element in the direction of the arrow, as further described herein.

The HF-RNC system 200 may include a feedforward sensor 202 configured to measure road noise related vibration and noise sources. In some examples, a feedforward microphone 206 may be combined with an accelerometer 204 to form a hybrid feedforward sensor unit (collectively, the feedforward sensor 202). The feedforward sensor 202 may be comprised of one or more of each of the accelerometer 204 and the microphone 206. Additionally or alternatively, the HF-RNC system 200 may include more than one feedforward sensor 202. The microphone 206 may be positioned close to tires (e.g., drive wheels) of the vehicle, where most airborne noise sources are created. For example, each microphone 206 may be positioned on an exterior of the vehicle, such as at a suspension knuckle, wheel house, subframe, and/or underbody of the vehicle. The microphone 206 and the accelerometer 204 may continuously capture road noise during operation of the vehicle, both when the vehicle is in motion and when the vehicle is stationary. For example, the feedforward sensor 202 may capture a sound profile of road noise, including the frequency of the road noise.

The feedforward sensor 202 may send information (e.g., road noise measurements, the sound profile) to an embedded system 208 of the HF-RNC system 200. The embedded system 208 comprises a digital signal processing (DSP) module 210, a low latency signal processing module 212, low latency filters (e.g., AA filters) 214, and a power management integrated circuit (power IC) 216. In some examples, embedded system 208 may be included in a processor of an in-vehicle computing system, such as in-vehicle computing system 109 of FIG. 1. As further described herein with respect to FIG. 11, the embedded system 208 may be configured with instructions stored in non-volatile memory that, when executed, provide high frequency road noise cancellation to at least part of the cabin of the vehicle. The feedforward sensor 202 may send information to the embedded system 208 in real time, that is, simultaneously as the road noise measurements are captured by the feedforward sensor 202.

The embedded system 208 may additionally receive information from a cabin microphone 228 and from a head-tracking device 234. The cabin microphone 228 may comprise a headrest microphone 230 and/or a headliner microphone 232. For example, the cabin microphone 228 may be positioned in or on a headrest of a seat, as described herein with respect to FIG. 6. As one example, the headrest microphone 230 may be an error microphone of the HF-RNC system. The cabin microphone 228 may be configured to capture ambient noise within the cabin of the vehicle. Each seat within the cabin may be configured with one or more cabin microphones 228. Thus, a cabin microphone 228 may be configured to capture ambient noise of a zone in which the cabin microphone 228 is positioned. For example, the cabin microphone 228 may be configured to capture ambient noise that may be experienced by an occupant positioned in the chair of the zone in which the cabin microphone 228 is positioned.

The head-tracking device 234 comprises an occupant head position tracker 236 and a seat locator 238. The occupant head position tracker 236 may include one or more of a camera, such as a stereo camera, and an artificial intelligence (AI) algorithm configured to track a position of a head of an occupant and, more specifically, ears of the occupant. The seat locator 238 may be a position sensor that is integrated in each set of the cabin. In some examples, the seat locator 238 may be included in the AI algorithm and may be configured to track a position of the headrest speaker 220. In some examples, one or more seats of the cabin may be modular (e.g., may be positioned in different locations within the cabin), and the seat locator 238 may track and report to the embedded system 208 a present position of a respective seat. In some embodiments, the occupant head position tracker 236 and the seat locator 238 may be integrated into a single device (e.g., the head-tracking device 234) configured to track both occupant ear position and seat location. For example, and as further described herein, a stereo camera positioned in the cabin of the vehicle may be used to capture three-dimensional images of the cabin, and identify the occupant ear position and the seat location of the seat in which the occupant is positioned. Additionally or alternatively, head-tracking device 234 may track a position of the headrest microphone 230.

The embedded system 208 may be configured with instructions stored in non-volatile memory that, when executed, generate a road noise cancellation signal to at least part of the cabin of the vehicle. The embedded system 208 uses information received from the feedforward sensor 202 to identify road noise outside of the cabin of the vehicle, uses information received from the head-tracking device 234 to identify a position of the user (e.g., a zone in which the user is positioned and a position of ears of the occupant within the zone), and uses information from the cabin microphone 228 to identify ambient road noise within the zone in which the occupant is positioned and additionally or alternatively as error microphones. The embedded system 208 executes instructions to process digital signals of road noise from the feedforward sensor 202 and the cabin microphone 228 (e.g., using digital signal processing module 210), and apply one or more low latency filters 214 thereto. The low latency signal processing module 212 and the power management integrated circuit 216 may be used to decrease an amount of data to be processed and generate a digital output signal to reduce the ambient road noise within the zone in real and/or near-real time. For example, a sampling rate for generating the noise cancellation signal may be greater than or equal to 2 kHz.

The embedded system 208 may send information (e.g., the noise cancellation signal) to a vehicle speaker system 218. The vehicle speaker system 218 may include multiple types of speakers to control ambient road noise in the broad band frequency range, including a headrest speaker 220, a door speaker 222, a center speaker 224, and a subwoofer 226. In some embodiments, multiple of each type of speaker may be included in the vehicle speaker system 218. The vehicle speaker system 218 further provides information to the cabin microphone 228. For example, one or more microphones of the cabin microphones 228 may detect sound output by one or more speakers of the vehicle speaker system 218. In this way, a feedback loop is established between the embedded system 208 and the vehicle speaker system 218 to determine whether the digital signal output by the embedded system 208 sufficiently reduces and/or cancels ambient road noise within the zone(s).

FIG. 3 shows a graph 300 illustrating coherence between a driver outer ear microphone and feedforward signals as measured at a single location as a function of frequency. Vibration and acoustic signals are measured at common locations using each of the accelerometer(s) 204 and the microphone(s) 206. An accelerometer signal 302 corresponds to coherence with the accelerometer 204 of the feedforward sensor. A microphone signal 304 corresponds to coherence with the microphone of the feedforward sensor. As shown in graph 300, coherence decreases above 500 Hz from the accelerometer signal 302 whereas coherence increases for the microphone signal 304 above 500 Hz. In this way, the feedforward microphone may help capture noise in a high frequency range (e.g., above 500 Hz and up to 1kHz) that is not sufficiently captured by the feedforward accelerometer in order to effectively actively cancel high frequency noise. Further, the feedforward sensor (e.g., feedforward sensor 202) which combines both the feedforward microphone and the feedforward accelerometer may provide the unexpected benefit of capturing vehicle noise over a broadband frequency range.

Conventional RNC systems may use low sampling rates, for example 1.5 kHz or 2 kHz, to create a digital signal that is configured to reduce a road noise signal (e.g., a noise cancelling signal). Low sampling rates may generally reduce, but may not sufficiently cancel, ambient road noise within the cabin of the vehicle. Increasing a sampling rate (e.g., taking more samples from a continuous signal) of the road noise measurement may increase resemblance between the measured signal (e.g., the road noise) and the digital signal.

The HF-RNC system 200 uses a higher sampling rate compared to conventional RNC systems, where the HF-RNC system 200 described herein may generate the noise cancelling signal at a sampling rate that is greater than 2 kHz. In further examples, the sampling rate of the HF-RNC system 200 may be greater than or equal to 3 kHz. Increasing the sampling rate may reduce latency by decreasing gaps between samples. The increased sampling rate may also enable use of low latency AA filters and buffer techniques that further reduce latency. The sampling rate of the HF-RNC system 200 may be increased to a maximum sampling rate that is enabled by available memory and Microprocessor without Interlocked Pipelined Stages (MIPS) of the computing system (e.g., embedded system 208). In terms of processing demand, low latency may be prioritized over digital signal processing time.

Additionally, conventional RNC systems may only use door speakers and subwoofers for noise cancellation. The HF-RNC system described herein may use headrest speakers in addition to door speakers and subwoofers.

A total vehicle active noise cancellation (ANC) system (e.g., such as HF-RNC system 200) latency may depend on a digital signal processing time and secondary acoustic pressure wave travel time in the air. The embedded system of the HF-RNC system described herein may use a conventional DSP. For example, the HF-RNC system may use a high bandwidth digital A2B bus for extremely low latency data transfer. An algorithm sampling rate may be increased within the allowable memory and MIPs of the system. Increasing the sampling rate in this way may help decrease the latency of the generated noise cancellation signal.

Additional latency reduction may be achieved by locating speakers close to occupant ears. Headrest speakers may thus be used in the HF-RNC system described herein to reduce air-time latency. For example, air-time latency from traditional door speakers may be greater than 3 milliseconds (ms). FIG. 4 shows a graph 400 comparing impulse responses over time from a door speaker compared to from a headrest speaker. A plot 402 corresponds to the impulse response of a headrest speaker (e.g., headrest speaker 220) and a plot 404 corresponds to the impulse response of a door speaker (e.g., door speaker 222). The headrest speaker output arrives at the occupant ear more than 3ms earlier than the door speaker output as indicated by arrow 406. In this way, use of headrest speaker to generate at least partially generate the noise cancelling signal may help reduce a latency of the HF-RNC system and more effectively cancel out high frequency noise.

Another benefit of headrest speakers may be that the headrest speakers provide a flat response in the broadband frequency range. FIG. 5 shows a graph 500 which compares a frequency response of the headrest speakers (e.g., headrest speaker 220) with that of a door speaker (e.g., door speaker 222). A first plot 502 corresponds to a frequency response of the headrest speaker and a second plot 504 corresponds to the frequency response of the door speaker. The door speaker response shows many peaks and valleys, which implies subjection of cavity modes and restricts a range of HF-RNC system performance robustness. Desirable and/or sufficient noise cancellation may not occur where frequency responses change drastically, as shown by that of the door speaker. Particularly, above 400 Hz, graph 500 shows multiple valleys and low noise cancellation efficiency from the door speaker. Meanwhile, the headrest speaker shows relatively flat response across the broadband frequency range, which may help the HF-RNC algorithm achieve desired noise cancellation performance.

Typical vehicle headrest speakers generate noise above 150 Hz. It is impractical to expect headrest speakers to cover the entire RNC frequency range. Thus, traditional door speakers and subwoofers are also used by the HF-RNC system to expand a bandwidth of the RNC speaker output. For example, it may be desirable (e.g., the most noise cancellation may be performed) when both headrest speakers (e.g., from a right side of the headrest and a left side of the headrest), door speakers, and subwoofers are included in the HF-RNC system and used to generate a noise cancellation signal.

FIG. 6 shows an example of a headrest noise cancellation system 600, which may be part of the HF-RNC system 200 of FIG. 2. As briefly described above, the headrest noise cancellation system 600 includes headrest microphones 602 and headrest speakers 604. Headrest microphones 602 may be an example of headrest microphone 230 and headrest speakers 604 may be an example of headrest speaker 220. Headrest noise cancellation system 600 may be physically coupled to a seat 606 of a vehicle (e.g., vehicle 102 of FIG. 1). Seat 606 may include a backrest 612 positioned to be in contact with a back of occupant 610 and a headrest 608 positioned to be in contact with a head of occupant 610. Headrest noise cancellation system 600 may be physically coupled to the headrest 608. In some examples, headrest noise cancellation system 600 may protrude from lateral sides of headrest 608 as shown in FIG. 6. In alternate examples, headrest noise cancellation system 600 may be partially or fully embedded within headrest 608 or backrest 612. In some examples, headrest microphone 602 and headrest speakers 604 may be included in a shared housing.

Conventional RNC systems may use virtual microphone techniques with headliner microphones. Headliner microphones may include microphones positioned in front of (e.g., with respect a direction of travel of the vehicle) the occupant. For example, the headliner microphone may be positioned in a dashboard of the vehicle and/or near a steering wheel of the vehicles. A headliner microphone may be separate from and physically distinct from a headrest microphone, such as headrest microphone 602.

For example, virtual microphone technology may be used to overcome a small quiet zone. Conventional RNC systems may use headliner cabin microphones to estimate noise at occupant ears. This may significantly relieve physical microphone packaging constraints in production vehicles and increase noise cancellation above 150 Hz. However, coherent signals from physical cabin microphones are still used to virtually sense noise at the occupants' ears. Due to complex vehicle cabin acoustics, it may be challenging to acquire coherent noise signals above 350 Hz from headliner microphones to estimate noise at the occupants' ears. The HF-RNC system described herein (e.g., which includes the headrest noise cancellation system 600) may use both headliner microphones and headrest microphones 602. Physical cabin microphones in the vicinity of the car seat headrest, such as headrest microphones 602 may provide acceptable coherence with noise at occupant ears in wide frequency range.

A desired position of the cabin microphones (e.g., cabin microphones 228) (herein, also "headrest microphones") may be determined based on a detailed location survey and a consequent virtual microphone algorithm simulation. Headrest physical microphones in the HF-RNC system described herein may contribute a majority of noise detection to the virtual microphone algorithm. For example, headrest microphones may contribute 50% or more of noise detection to the virtual microphone algorithm. However, for some noise contents, headliner physical microphones may provide additional coherence. Thus, a desirable (e.g., a most accurate) noise level may be detected when both headliner and headrest microphones are used in a virtual microphone technique. In some embodiments, the headrest microphones may be digital microphones.

FIG. 7 shows a graph 700 that compares noise directly measured at the occupant ear and estimated noise at the occupant ear by a virtual microphone technique using both a headrest microphone (e.g., headrest microphones 602) and a headliner microphone. A first plot 702 corresponds to the measured noise at the ear and a second plot 704 corresponds to the estimated noise at the ear. As shown in the graph 700, estimated noise approximately matches the measured noise up to 1 kHz, with increasing deviation (e.g., separation) between noise detection abilities beginning at approximately 575Hz.

As briefly described with respect to FIG. 6, a vehicle having the HF-RNC system may have one or more desired quiet zones in which road noise is actively cancelled using the HF-RNC system. The occupant may experience a quieter ride when the ears of the occupant are within the quiet zone. A size of the quiet zone may be determined by multiple factors, including the frequency range of the noise source, an acoustic field, and a number of secondary sources. As frequency increases, wavelength decreases, which results in a smaller quiet zone size. A zone of quiet (ZoQ) is defined herein as a zone within which sound has been attenuated by at least 10dB. In general, a spatial extent of a local active control system (e.g., the headrest noise cancellation system 600 installed on a single car seat) is approximately one tenth of a wavelength.

A ZoQ of a high frequency ANC system is relatively small, therefore, to maintain sufficient noise cancellation performance regardless of occupants' physical size and movement, second path information may be updated according to occupants' ear and speaker positions. The HF-RNC system described herein includes an AI-based head tracking system configured to track occupants' ear and headrest speaker locations. The AI-based head tracking system uses a stereo depth camera and face detection AI algorithm to detect the occupants' ears and speakers, and computes relative distances among the ears and speakers using disparity. Three dimensional coordinates of driver and passenger (e.g., collectively, occupants) inner ears and headrest speakers may be measured with a single head-tracking system.

FIG. 8 shows an illustration 800 of an interior of a vehicle 810 configured with the HF-RNC system (e.g., HF-RNC system 200), and pathways of the AI-based head-tracking system (e.g., head-tracking device 234). The AI-based head-tracking system may include a stereo depth camera 802 to continuously track occupants' ear positions and speaker positions and adjusts pre-measured second path information to preserve cancellation performance regardless of occupants' positions. The AI-head tracking system may track facial features and may be further configured to identify a three-dimensional position of the occupant ears from the facial features. Stereo depth camera 802 may be positioned on or within a dashboard 808 of vehicle 810. Other locations of stereo depth camera 802 are also considered. In some examples, the head-tracking system may include more than one stereo depth camera 802. In further examples, a stereo depth camera may be included for each potential occupant of a vehicle. The AI-based head tracking system may detect an occupant's ears 804 and headrest speaker 806 locations, and the system may change second paths, including: path P from speaker to cabin microphone (e.g., headliner microphone and headrest microphone), path V from all speakers to virtual microphone, and path PV from cabin microphone to virtual microphone corresponding to the detected occupant's ear and headrest speaker locations.

FIG. 9 shows a block diagram 900 of an example algorithm of the HF-RNC system. The HF-RNC algorithm may include a first path 904 having a transfer function P(z) representing transfer characteristics of the first signal path between a noise source 902 and a position of the occupant. The noise source 902 may additionally be measured at a reference signal 906. The reference signal 906 may be from a feedforward sensor (e.g., feedforward sensor 202) The HF-RNC may further include a filter 908 having a transfer function W(z). Additionally the HF-RNC may include a least means squared (LMS) filter 910. Further, the HF-RNC may include an actual second path 912 having a transfer function Se(z). Transfer function Se(z) may represent a signal path between one or more speakers 914 (e.g., vehicle speaker system 218) playing a filtered signal from transfer function W(z) and the position of the physical error microphone 916 and virtual error microphone 918.

The reference signal 906 may represent the noise source 902 to the filter 908. The filter 908 may impose an amplitude and a phase shift onto the reference signal 906 to output the filtered signal to be played via the one or more speakers 914. For example, the amplitude and/or the phase shift (e.g., 180°) may be adjusted such that reference signals 906 convolved with the filter 908 and output through the speakers as filtered signals achieve cancellation at microphone positions. The speaker output may be transferred via an actual second path 912, and supplied to a physical second path 936 having a transfer function Sp(z) and a virtual second path 924 having a transfer function Sv(z).

The HF-RNC algorithm may combine the filtered signal via second path 912 with the noise source 902 via the first path 904 to produce input signals for the physical error microphone 916 (e.g., headrest microphone 602) which are represented by a first summing node 920 that performs summation operations in the HF-RNC algorithm to produce the input signal which are transformed into a first error signal 922. The error signal 922 may be combined with the filtered signal output by the filter 908 via the physical second path 936 to form inputs to path H(z) 926, represented by second summing node 928. Path H(z) 926 may correspond to occupant's ear location and speaker location as determined by a head-tracking system such as head-tracking device 234. For example, the monitored occupant ear position from the head-tracking device 234 may be used to adjust path H(z). The adjustments may be monitored at a high sampling rate (e.g., greater than 2kHz) and adjusted at a low latency.

The output signal of path H(z) 926 may be combined with filtered signal output by W(z) 908 via the virtual second path Sv(z) to form inputs to the one or more virtual error microphones 918 and represented by third summing node 930. The one or more virtual error microphones may transform the inputs into a second error signal 932. The LMS filter 910 and filter signal 908 may be modified by the algorithm based on the second error signal 932. Additionally, the HF-RNC algorithm may update LMS filter 910 and filter signal 908 based on a stored second path 934 via a transfer function Se'(z) generated by reference signals 906.

FIG. 10 shows a graph 1000 illustrating driver seat noise cancellation performance for an electric vehicle at a vehicle speed of 50 miles per hour (mph) by comparing decibels per hertz (dB/Hz) when the HF-RNC system is on, as shown by plot 1004, and when the HF-RNC system is off, as shown by plot 1002. Data is collected to show driver seat noise cancellation performance (driver outer ear HR-RNC noise cancellation performance) at 50 mph on a public rough road. As shown by the graph 1000, noise cancellation up to 1 kHz is achieved. More than 10dB peak noise cancellation at low frequency and up to 6dB noise cancellation at peaks above 500Hz are observed.

FIG. 11 is a flow chart of a method 1100 for active road noise cancellation. The method 1100 described herein may be implemented in a vehicle system which includes a high frequency - road noise cancellation (HF-RNC) system, such as the HF-RNC system 200 of FIG. 2 and the vehicle 102 of FIG. 1. As such, the method 1100 may be stored as executable instructions in non-transitory memory (e.g., non-volatile storage device 108 and/or non-volatile memory 119B) and executed by a processor (e.g., operating system processor 114 and/or interface processor 120) of the embedded system. Method 1100 may be an example of implementing an algorithm of the HF-RNC system, such as the algorithm shown in block diagram 900 of FIG. 9.

At 1102, the method 1100 includes monitoring an occupant ear position using a head-tracking device (e.g., head-tracking device 234). As described herein, the head-tracking device may use a stereo depth camera and face detection AI algorithm to detect the occupants' ears and headrest speakers corresponding to the occupant, and computes relative distances among the ears and speakers using disparity. Three dimensional coordinates of driver and passenger(s) (e.g., collectively, occupants) inner ears and headrest speakers may be measured with a single head tracking device.

At 1104, the method 1100 includes capturing an airborne noise source using a feedforward sensor (e.g., feedforward sensor 202) and a cabin microphone of a zone in which the occupant ear is positioned. The feedforward sensor may include a feedforward accelerometer and a feedforward microphone. The feedforward microphone may be positioned on an exterior surface of the vehicle as described above. Capturing airborne noise via the feedforward sensor may provide a reference signal to the HF-RNC algorithm. The cabin microphone may include a headrest microphone, such as headrest microphone 602. In further examples, cabin microphone may additionally include a headliner microphone. The cabin microphone may comprise one or more physical error microphones of the HF-RNC algorithm.

At 1106, the method 1100 includes updating acoustic path information according to the occupant ear position and speaker position(s) within the zone. Updated acoustic path information may include applying a path function to a signal output by physical error microphones. The path function may be used to produce an error signal used to update physical and virtual acoustic second paths.

At 1108, the method 1100 includes generating a noise cancellation signal using a sampling rate greater than 2 kHz. In some examples, the sampling rate may be greater than or equal to 3kHz. The noise cancellation signal may be generated using low latency anti-aliasing (AA)-filters.

At 1110, the method 1100 includes outputting the noise cancellation signal via a vehicle speaker system of the zone in which the occupant ear is positioned to at least partially reduce a road noise sound level in the zone. The vehicle speaker may be an example of vehicle speaker system 218 of FIG. 2. Outputting the noise cancellation signal to the vehicle speaker system may include, at 1112 outputting the noise cancellation signal to a headrest speaker (e.g., headrest speaker 604). Outputting the noise cancellation signal to the vehicle speaker system may optionally include at 1114 outputting the noise cancellation signal to one or more additional speakers including one or more of a door speaker, a subwoofer, and a center speaker. The one or more additional speakers may be inside or outside a zone of the occupant ear position. The noise cancellation signals output at 1114 may be additional noise cancellation signals output at the same time as the noise cancellation signals output by the headrest speakers. Method 1100 Returns.

In this way, road noise cancellation may be provided based on a position of a vehicle occupant, and the road noise cancellation may cancel road noise having frequencies up to and beyond 1kHz. By using microphones and speakers of a zone in which the occupant is positioned (e.g., headrest microphones and speakers) in addition to feedforward microphones and speakers positioned in the cabin of the vehicle (e.g., door speakers, center speakers, etc.), the HF-RNC system may be more efficiently and specifically cancel high frequency road noise, compared to conventional RNC systems.

The disclosure also provides support for a method for high frequency road noise cancellation in a vehicle system, comprising: monitoring an occupant ear position using a head-tracking device, capturing an airborne noise source using a feedforward microphone and a headrest microphone of a zone of the occupant ear position, updating acoustic path information according to the occupant ear position and speaker position(s) within the zone, generating a noise cancellation signal at a sampling rate greater than 2kHz, and outputting the noise cancellation signal via a headrest speaker located near the zone of the occupant ear position to at least partially reduce a road noise sound level in the zone. In a first example of the method, the method further comprises: outputting additional noise cancellation signals via one or more additional speakers inside or outside the zone of the occupant ear position. In a second example of the method, optionally including the first example, the headrest microphone is coupled to a seat headrest and/or a backrest of a seat of the vehicle system. In a third example of the method, optionally including one or both of the first and second examples, the head-tracking device comprises a stereo camera configured to capture three-dimensional images of occupant ears and headrest speakers. In a fourth example of the method, optionally including one or more or each of the first through third examples, the headrest speaker and the headrest microphone are mounted in a shared housing. In a fifth example of the method, optionally including one or more or each of the first through fourth examples, the head-tracking device uses artificial intelligence to identify and track facial features including ears. In a sixth example of the method, optionally including one or more or each of the first through fifth examples, generating the noise cancellation signal includes using low latency anti-aliasing filters.

The disclosure also provides support for a vehicle system, comprising: a feedforward sensor, including an accelerometer and a microphone, a vehicle speaker system, including a headrest speaker, a door speaker, a center speaker, and a subwoofer, a cabin microphone, including a headrest microphone and a headliner microphone, a head-tracking device configured to detect an occupant ear position and seat location, an embedded system including a digital signal processing system, a low latency signal processing system, low latency filters, and a power management integrated circuit, and instructions stored on non-volatile memory of the embedded system with computer-readable instructions that, when executed, cause the embedded system to: monitor the occupant ear position using the head-tracking device, capture airborne noise using the feedforward sensor and the headrest microphone located near a zone of the occupant ear position, update acoustic path information according to the occupant ear position and speaker position(s) within the zone, generate a noise cancelling signal at a using a sampling rate greater than 2kHz, and output the noise cancelling signal via the headrest speaker located near the zone of the occupant ear position to at least partially reduce a road noise sound level in the zone. In a first example of the system, the headrest microphone is coupled to a headrest and/or a backrest of a seat of the vehicle system. In a second example of the system, optionally including the first example, the head-tracking device comprises a stereo camera configured to capture three-dimensional images of occupant ears and headrest speakers. In a third example of the system, optionally including one or both of the first and second examples, the headrest speaker and the headrest microphone are mounted in a shared housing. In a fourth example of the system, optionally including one or more or each of the first through third examples, the noise cancelling signal reduces noise up to 1kHz. In a fifth example of the system, optionally including one or more or each of the first through fourth examples, the instructions include to capture airborne noise using the headliner microphone and the headrest microphone. In a sixth example of the system, optionally including one or more or each of the first through fifth examples, the instructions include to output the noise cancelling signal via the door speaker, the center speaker, and the subwoofer in addition to the headrest speaker.

The disclosure also provides support for a high frequency road noise cancellation system of a vehicle, comprising: a feedforward sensor including a feedforward microphone, a vehicle speaker system including a headrest speaker, a head-tracking device configured to track positions of occupant ears and position of a headrest microphone, a cabin microphone including the headrest microphone, an embedded system including a digital signal processing module and instructions stored on non-volatile memory that when executed cause the embedded system to: monitor an occupant ear position using the head-tracking device, capture an airborne noise source using the feedforward sensor and cabin microphone, update an acoustic path information based on the occupant ear position, generate a noise cancellation signal using the updated acoustic path information, and output the noise cancellation signal using the vehicle speaker system. In a first example of the system, the cabin microphone is an error microphone and airborne noise captured by the cabin microphone adjusts a filter used to generate the noise cancellation signal. In a second example of the system, optionally including the first example, the instructions include to adjust the filter based on the output of the error microphone modified by the monitored occupant ear position. In a third example of the system, optionally including one or both of the first and second examples, the instructions to update the acoustic path information includes to update a physical second path and virtual second path. In a fourth example of the system, optionally including one or more or each of the first through third examples, the vehicle speaker additionally includes one or more of a door speaker, a subwoofer, and a center speaker. In a fifth example of the system, optionally including one or more or each of the first through fourth examples, an output of the vehicle speaker arrives at an occupant ear before an output of the door speaker.

The description of embodiments has been presented for purposes of illustration and description. Suitable modifications and variations to the embodiments may be performed in light of the above description or may be acquired from practicing the methods. For example, unless otherwise noted, one or more of the described methods may be performed by a suitable device and/or combination of devices. The methods may be performed by executing stored instructions with one or more logic devices (e.g., processors) in combination with one or more additional hardware elements, such as storage devices, memory, hardware network interfaces/antennas, switches, actuators, clock circuits, et cetera. The described methods and associated actions may also be performed in various orders in addition to the order described in this application, in parallel, and/or simultaneously. The described systems are exemplary in nature, and may include additional elements and/or omit elements. The subject matter of the present disclosure includes all novel and non-obvious combinations and sub-combinations of the various systems and configurations, and other features, functions, and/or properties disclosed.

As used in this application, an element or step recited in the singular and preceded with the word "a" or "an" should be understood as not excluding plural of said elements or steps, unless such exclusion is stated. Furthermore, references to "one embodiment" or "one example" of the present disclosure are not intended to be interpreted as excluding the existence of additional embodiments that also incorporate the recited features. The terms "first," "second," and "third," et cetera are used merely as labels, and are not intended to impose numerical requirements or a particular positional order on their objects. The following claims particularly point out subject matter from the above disclosure that is regarded as novel and non-obvious.

## Claims

1. A method for high frequency road noise cancellation in a vehicle system, comprising:
monitoring an occupant ear position using a head-tracking device;
capturing an airborne noise source using a feedforward microphone and a headrest microphone of a zone of the occupant ear position;
updating acoustic path information according to the occupant ear position and speaker position(s) within the zone;
generating a noise cancellation signal at a sampling rate greater than 2kHz; and
outputting the noise cancellation signal via a headrest speaker located near the zone of the occupant ear position to at least partially reduce a road noise sound level in the zone.

2. The method of claim 1, further comprising outputting additional noise cancellation signals via one or more additional speakers inside or outside the zone of the occupant ear position.

3. The method of claim 1, wherein the headrest microphone is coupled to a seat headrest and/or a backrest of a seat of the vehicle system.

4. The method of claim 1, wherein the head-tracking device comprises a stereo camera configured to capture three-dimensional images of occupant ears and headrest speakers.

5. The method of claim 1, wherein the headrest speaker and the headrest microphone are mounted in a shared housing.

6. The method of claim 1, wherein the head-tracking device uses artificial intelligence to identify and track facial features including ears.

7. The method of claim 1, wherein generating the noise cancellation signal includes using low latency anti-aliasing filters.

8. A vehicle system, comprising:
a feedforward sensor, including an accelerometer and a microphone;
a vehicle speaker system, including a headrest speaker, a door speaker, a center speaker, and a subwoofer;
a cabin microphone, including a headrest microphone and a headliner microphone;
a head-tracking device configured to detect an occupant ear position and seat location;
an embedded system including a digital signal processing system, a low latency signal processing system, low latency filters, and a power management integrated circuit; and
instructions stored on non-volatile memory of the embedded system with computer-readable instructions that, when executed, cause the embedded system to perform the method of any of claims 1 to 7.

9. The vehicle system of claim 8, wherein the noise cancelling signal reduces noise up to 1 kHz.

10. The vehicle system of claim 8, wherein the instructions include to capture airborne noise using the headliner microphone and the headrest microphone.

11. The vehicle system of claim 8, wherein the instructions include to output the noise cancelling signal via the door speaker, the center speaker, and the subwoofer in addition to the headrest speaker.

12. A high frequency road noise cancellation system of a vehicle, comprising:
a feedforward sensor including a feedforward microphone;
a vehicle speaker system including a headrest speaker;
a head-tracking device configured to track positions of occupant ears and position of a headrest microphone;
a cabin microphone including the headrest microphone;
an embedded system including a digital signal processing module and instructions stored on non-volatile memory that when executed cause the embedded system to:
monitor an occupant ear position using the head-tracking device;
capture an airborne noise source using the feedforward sensor and cabin microphone;
update an acoustic path information based on the occupant ear position;
generate a noise cancellation signal using the updated acoustic path information; and
output the noise cancellation signal using the vehicle speaker system.

13. The high frequency road noise cancellation system of claim 12, wherein the cabin microphone is an error microphone and airborne noise captured by the cabin microphone adjusts a filter used to generate the noise cancellation signal.

14. The high frequency road noise cancellation system of claim 13, wherein the instructions include to adjust the filter based on the output of the error microphone modified by the monitored occupant ear position.

15. The high frequency road noise cancellation system of claim 12, wherein the instructions to update the acoustic path information includes to update a physical second path and virtual second path.
